# FASCICULE DE BREVET EUROPEEN

(11) **EP 2 261 077 B1**
(45) Date de publication et mention de la délivrance du brevet: **22.08.2012**
(21) Numéro de dépôt: 10164873.1
(22) Date de dépôt: 03.06.2010
(51) Int. Cl.: B60N 2/28, B60R 22/10

(54) **Siège auto pour enfant**
Kraftfahrzeug-Kindersitz
Car seat for a child

(30) Priorité: 04.06.2009 FR 0953710
(43) Date de publication de la demande: 15.12.2010
(73) Titulaire: Dorel France SA, 49309 Cholet Cedex (FR)
(72) Inventeur: Biaud, Richard, 49340, Trementines (FR)
(74) Mandataire: Bioret, Ludovic

(56) Documents cités:
- EP-A1- 1 625 983
- EP-A2- 1 123 833
- WO-A1-01/66380
- US-A1- 2005 212 342

## Description

### 1. Domaine de l'invention

Le domaine de l'invention est celui de la puériculture. Plus précisément, l'invention concerne les sièges pour enfants destinés à être installés dans un véhicule automobile et appelés généralement dispositifs de retenue pour enfant en voiture. En particulier, l'invention s'applique aux sièges pour enfant du groupe 0 ou 0+ ou 0+/1 ou 1/2 selon la terminologie réglementaire, du type comportant une structure comprenant au moins une assise, un dossier et une têtière, le siège comprenant également un harnais de sécurité indépendant de la ceinture de sécurité du véhicule automobile.

Un tel siège pour enfant est destiné à être utilisé pendant une période relativement importante de la vie d'un enfant par rapport notamment à l'évolution de sa morphologie et/ou par différents enfants.

Il est donc nécessaire que ce siège puisse évoluer et/ou être adapté à l'enfant transporté. Une telle adaptabilité est également souhaitable pour tenir compte de la façon dont l'enfant est habillé.

Dans le domaine de l'invention, divers systèmes ont été proposés par l'art antérieur pour permettre le réglage d'un siège, afin de l'adapter à l'enfant transporté. Notamment, il faut que la têtière destinée à maintenir la tête de l'enfant soit parfaitement placée. C'est pourquoi de nombreux sièges, et en particulier le siège selon l'invention, comportent une têtière mobile en translation sensiblement verticalement relativement au dossier et pouvant occuper au moins une position basse et une position haute. L'utilisateur peut ajuster la position de la têtière en fonction du positionnement de l'enfant dans le siège.

De même, les bretelles du harnais de sécurité doivent être correctement placées au niveau des épaules quelle que soit la taille de l'enfant. Pour cela, deux fentes peuvent être réalisées dans la têtière et deux grandes ouvertures peuvent être réalisées dans le dossier, de manière notamment à ce que les bretelles du harnais passent au travers de ces fentes et puissent suivre le déplacement de la têtière. Les ouvertures dans le dossier peuvent également permettre le passage d'une partie de la têtière pour permettre le déplacement en translation de celle-ci.

Des fourreaux sont parfois prévus sur les bretelles. Ces fourreaux consistent par exemple en des manchons agencés pour venir entourer les bretelles du harnais de sécurité sur une portion de celles-ci, notamment au niveau du torse et des épaules de l'enfant. Les fourreaux sont généralement réalisés en tissu recouvrant une mousse et, pour une partie destinée à venir en contact avec l'enfant, en un matériau à fort coefficient de frottement adhérant au vêtement de l'enfant, ce qui permet une meilleure retenue de l'enfant, notamment lors d'un accident.

De tels fourreaux conformes au préambule de la revendication 1 sont par exemple décrits dans la demande internationale WO-A-01/66380.

### 2. Etat de la technique

Le problème de placement correct existe également pour les fourreaux, qui doivent être correctement placés au niveau des épaules et du thorax. En effet, pour renforcer la sécurité en particulier lorsque le siège est face à la route, le fourreau doit être correctement placé sur l'enfant de manière à participer efficacement à sa retenue en cas de choc, pendant toute la durée de celui-ci, c'est-à-dire pendant tout le mouvement de l'enfant pendant l'accident.

Pour améliorer le placement des fourreaux sur l'enfant, les fourreaux de certains sièges sont retenus par un élément de retenue, par exemple un lien, limitant la course du fourreau, indépendamment du harnais de sécurité. C'est par example le cas dans la demande de brevet EP 1 625 983, qui décrit un harnais entouré d'un fourreau, lui même retenu par un élément de retenue, indépendamment du harnais. C'est également le cas des techniques décrites dans le document EP-1 123 833, qui propose lui, différentes solutions pour augmenter la distance entre le dossier et le fourreau, à mesure que la hauteur des sangles augmente. L'objectif est ici d'augmenter la longueur visible, ou apparente, (c'est-à-dire la portion entre le dossier et le fourreau) de l'élément de retenue, lorsque le passage de sangle est remonté (au fur et à mesure que l'enfant grandit) et donc inversement de réduire la portion de sangle circulant à l'intérieur du dossier.

Pour cela, une extrémité des éléments de retenue des fourreaux peut être maintenue dans le dossier, par exemple par un élément de butée, au niveau d'une des fentes de passage de l'élément de retenue formée dans le dossier (voir figures 9 et 11 de ce document). Ce mode de réalisation, destiné aux sièges munis de quelques (classiquement trois) séries de deux fentes pour le passage des sangles, est complexe à mettre en oeuvre, pour les utilisateurs, et présente des risques de montages incorrects (« misuses » en anglais), puisque c'est l'utilisateur qui doit effectuer le réglage de la longueur apparente de l'élément de retenue.

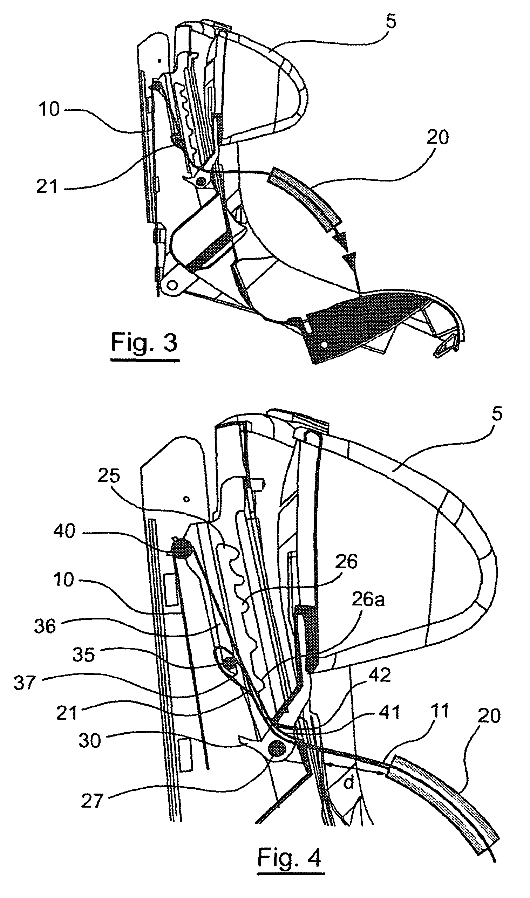

Selon une variante, illustrée par les figures 3 à 6, les éléments de retenue sont solidarisés par un élément élastique à des moyens de tension du harnais, toujours dans le but d'augmenter la distance entre le dossier et le fourreau, à mesure que la hauteur des sangles augmente.

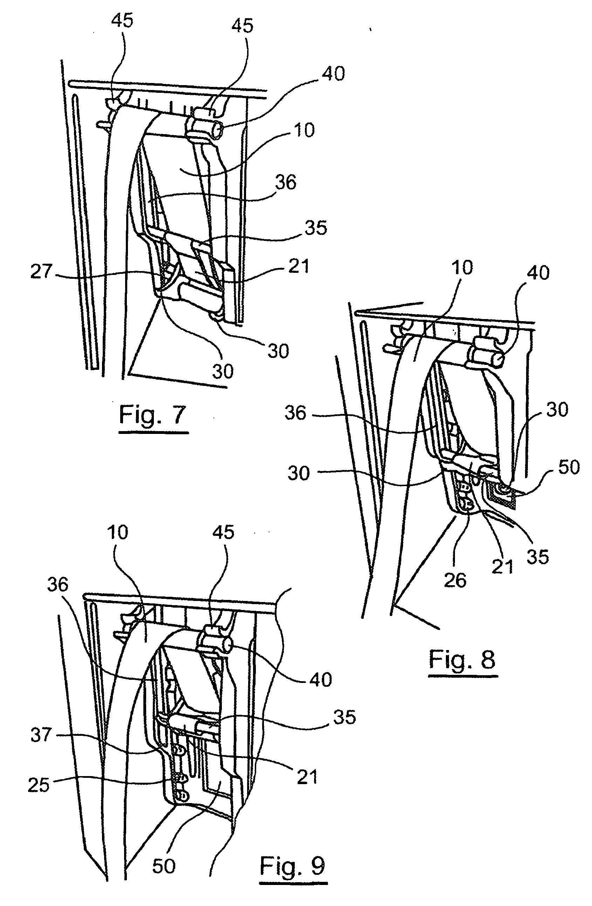

Dans encore une autre variante, illustrée par les figures 7 et 8, l'élément de retenue est solidarisée à un élément fixe dans le dossier. Dans ce cas, la longueur de la portion de l'élément de retenue s'étendant entre le dossier et le fourreau, appelée ici longueur apparente, augmente effectivement au fur et à mesure que les sorties des sangles sont remontées le long du dossier. En d'autres termes, plus la sortie des sangles est haute, plus les fourreaux sont déplacés vers le bas. Ceci permet, en principe, de placer le fourreau de façon adapter sur le buste de l'enfant, au fur et à mesure qu'il grandit. Cette dernière approche correspond à l'art antérieur le plus proche de l'invention.

Cependant, les inventeurs ont constaté que cette approche n'était pas souhaitable en pratique, et parfois même dangereuse pour l'enfant. En effet, il apparaît que la position idéale du fourreau n'est pas linéaire par rapport à la position des passages de sangle, et que les fourreaux risquent de se trouver trop bas, notamment pour les enfants les plus grands.

Dans d'autres sièges connus, le fourreau est fixé au harnais et reste donc au même emplacement sur le harnais, quelle que soit la position de la têtière. Un inconvénient de tels sièges est que le fourreau n'est pas non plus placé correctement par rapport à l'enfant dans certaines positions de la têtière.

Certains sièges peuvent se monter dos à la route pour les bébés ou face à la route pour les enfants plus grands. Lorsque le siège est placé dos à la route, aucun fourreau n'est nécessaire. Il est connu pour ces sièges d'indiquer à l'utilisateur de démonter les fourreaux lorsque le siège est dos à la route ou bien de fournir à l'utilisateur avec le siège des fourreaux plus petits que l'on peut adapter sur le harnais lorsque le siège est placé dos à la route.

En effet, pour des enfants en bas âge, la têtière est placée en bas et les fourreaux présentent alors généralement une longueur trop importante par rapport à l'enfant et entraînent des problèmes de serrage correct de l'enfant. L'opération de démontage des fourreaux ou de remplacement de grands fourreaux par des petits fourreaux, peut être considérée comme fastidieuse par les utilisateurs. Elle est surtout dangereuse car elle entraîne le démontage du harnais avec des risques de mauvais remontage.

### 3. Objectifs de l'invention

Il existe donc un besoin pour améliorer la sécurité et/ou le confort de l'enfant assis dans le siège.

Il existe également un besoin pour faciliter la manipulation et l'utilisation du siège, notamment pour permettre d'ajuster facilement et efficacement le siège à la taille de l'enfant.

Il existe, en particulier, un besoin pour améliorer l'efficacité des fourreaux sur les sièges.

L'invention vise notamment à répondre à tout ou partie de ces besoins.

### 4. Exposé de l'invention

L'invention y parvient grâce à un siège pour enfant destiné à être installé dans un véhicule, notamment automobile, comprenant une assise, un dossier et une têtière mobile en translation relativement au dossier entre une position basse et une position haute, ledit siège étant équipé d'un harnais de sécurité destiné à maintenir un enfant assis dans le siège, comprenant deux bretelles portant chacune un fourreau relié au siège par l'intermédiaire d'un élément de retenue indépendamment du harnais de sécurité.

L'invention est caractérisé en ce que, chacun desdits éléments de retenue est fixé à des moyens de maintien coopérant avec des moyens de solidarisation sélective à ladite têtière, de façon que lesdits moyens de maintien soient :
- solidaires de la têtière lorsque celle-ci est entre ladite position haute et une position intermédiaire prédéfinie,
- désolidarisés de ladite têtière et solidaires du dossier, lorsque la têtière est entre ladite position intermédiaire prédéfinie et la position basse.

Ainsi, selon l'invention, le siège est configuré de manière à maintenir sensiblement constante une longueur apparente de l'élément de retenue du fourreau lorsque la têtière est déplacée sur au moins une portion de déplacement comprise entre la position intermédiaire prédéfinie et la position haute. Le siège est de plus configuré de manière à faire varier la longueur apparente de l'élément de retenue du fourreau lorsque la têtière est déplacée sur une portion de déplacement comprise entre la position basse et la position intermédiaire prédéfinie.

Par « longueur apparente », on désigne ici la longueur de la partie visible de l'élément de retenue comprise entre l'ouverture de la têtière que l'élément de retenue traverse et le fourreau, plus précisément le premier bord du fourreau rencontré, en partant de l'ouverture de la têtière, sur le côté avant du siège, c'est-à-dire sur le côté du siège qui accueille l'enfant. La longueur totale de l'élément de retenue est constante.

Grâce à l'invention, la longueur apparente de l'élément de retenue du fourreau est variable sur une portion du déplacement de la têtière et elle est sensiblement constante sur une autre portion de déplacement de la têtière. Ainsi, au long de la croissance de l'enfant, et donc du déplacement de la têtière sur le siège, le fourreau qui accompagne cette croissance est toujours correctement placé sur les épaules de l'enfant, quelle que soit la position de la têtière.

La têtière peut comporter au moins une, notamment deux, ouvertures, par exemple des fentes, permettant le passage des éléments de retenue, et également des bretelles, depuis l'arrière du siège vers l'avant du siège (où on place l'enfant), les ouvertures de la têtière étant solidaires en déplacement de la têtière.

Le dossier peut comporter au moins une, notamment deux ouvertures, avantageusement masquées par la têtière, permettant le passage des éléments de retenue, des bretelles et également d'une partie de la têtière, de manière à permettre le déplacement de celle-ci. La présence sur la têtière d'ouvertures au travers desquelles passent le harnais et les éléments de retenue permet, lorsque la têtière est déplacée, de déplacer en hauteur également une extrémité supérieure des bretelles, qui est la partie du harnais située au niveau de l'ouverture, et les éléments de retenue. Ceci permet d'ajuster la position du harnais et des éléments de retenue à la stature de l'enfant, au niveau des épaules de celui-ci.

Les caractéristiques complémentaires énumérées ci-après, font l'objet des revendications dépendantes.

Chaque élément de retenue peut consister par exemple en une sangle.

Les moyens de maintien des éléments de retenue peuvent comprendre au moins une tige configurée pour retenir l'élément de retenue du fourreau. Le siège peut en outre comprendre au moins une glissière fixe relativement au dossier, la tige étant apte à coulisser dans la glissière.

La tige peut être agencée pour retenir l'élément de retenue à une extrémité de celui-ci, par exemple. L'élément de retenue du fourreau peut notamment former une boucle autour de la tige.

Les moyens de solidarisation sélective peuvent comporter par exemple au moins un crochet d'entraînement solidaire en déplacement de la têtière, ce crochet d'entraînement étant configuré pour entraîner les moyens de maintien des éléments de retenue, par exemple la tige, en coulissement dans la ou les glissières, lorsque la têtière est déplacée sur la portion comprise sensiblement entre la position intermédiaire prédéfinie et la position haute.

Sur cette portion de déplacement de la têtière, les moyens de solidarisation sélective sont actifs et solidarisent les moyens de maintien à la têtière. Entre la position basse et la position intermédiaire prédéfinie de la têtière, les moyens de solidarisation sélective sont inactifs et désolidarisent les moyens de maintien de la têtière de manière à ce que les moyens de maintien soient solidaires du dossier et non de la têtière.

L'élément de retenue peut être mobile en rotation relativement aux moyens de maintien, par exemple mobile en rotation autour de la tige. La tige peut être mobile en rotation à l'intérieur de la glissière. Cette ou ces mobilités en rotation peuvent faciliter les mouvements de l'élément de retenue et de la tige le long de la glissière.

La ou chaque glissière peut s'étendre sensiblement parallèlement à un plan de déplacement de la têtière, sur une portion seulement de la course de la têtière.

Les moyens de maintien peuvent coopérer avec une portion du dossier, lorsque la têtière est dans une position comprise entre la position basse et la position intermédiaire prédéfinie. Ladite portion du dossier peut par exemple comporter une extrémité inférieure de la glissière formant une zone de retenue de la tige lorsque la têtière est dans une position comprise entre la position basse et la position intermédiaire prédéfinie, de manière à faire varier la longueur apparente de l'élément de retenue du fourreau lorsque la têtière est déplacée sur une portion de déplacement comprise entre la position basse et la position intermédiaire prédéfinie.

L'extrémité inférieure de la glissière peut ainsi définir la hauteur de la position intermédiaire prédéfinie. Dans ce cas, l'élément de retenue fixe relativement à la tige peut être retenu à hauteur de la position intermédiaire prédéfinie lorsque la têtière est située dans une position comprise entre la position basse et la position intermédiaire prédéfinie. Ainsi, la longueur apparente de l'élément de retenue est minimale pour la position basse de la têtière, puis elle augmente avec le déplacement de la têtière jusqu'à une position maximale en position intermédiaire prédéfinie.

Entre la position intermédiaire prédéfinie et la position haute de la têtière, la tige peut être déplacée en même temps que la têtière par les moyens de solidarisation sélective mentionnés plus haut, ce qui permet d'avoir une longueur apparente constante.

Le siège, et notamment la têtière, peut comporter des moyens de déviation configurés pour, entre la position basse et la position intermédiaire prédéfinie, dévier l'élément de retenue du fourreau, par exemple modifier ou agir sur la forme de l'élément de retenue, de manière à faire varier la longueur apparente d'élément de retenue du fourreau.

Dans ce cas, les moyens de déviation sont configurés de manière à ce que la déviation de l'élément de retenue varie en fonction du déplacement de la têtière.

Les moyens de déviation peuvent être configurés de manière à ce que la déviation de l'élément de retenue soit maximale en position basse de la têtière et que la déviation diminue au fur et à mesure du déplacement de la têtière jusqu'à une absence de déviation en position intermédiaire prédéfinie de la têtière.

Grâce aux moyens de déviation, la longueur apparente de l'élément de retenue du fourreau varie en fonction de la position de la têtière et donc en fonction de la taille de l'enfant, lorsque l'enfant est petit, c'est-à-dire pour les positions intermédiaires basses de la têtière comprises entre la position basse et la position intermédiaire prédéfinie. Ainsi, lorsque la déviation est maximale en position basse, la longueur apparente de l'élément de retenue est la plus petite. Cette déviation est moins importante au fur et à mesure que l'on déplace la têtière jusqu'à une absence de déviation ou une déviation très faible en position intermédiaire prédéfinie de la têtière.

Les moyens de déviation peuvent comprendre au moins un bord de l'ouverture, notamment le bord supérieur de celle-ci, réalisée dans la têtière pour le passage de l'élément de retenue et éventuellement du harnais. Les moyens de déviation peuvent être fixes relativement à la têtière. Les moyens de déviation permettent, lorsqu'ils comprennent un bord de l'ouverture, de dévier le trajet de l'élément de retenue, de manière à diminuer la longueur apparente.

La structure peut comprendre un système de translation de la têtière, comprenant par exemple au moins une crémaillère munie d'encoches, la têtière étant mobile en translation le long de cette crémaillère, la têtière pouvant occuper une pluralité de positions correspondant aux encoches entre la position basse et la position haute. La glissière peut être sensiblement parallèle à la crémaillère sur une portion de celle-ci.

La têtière peut être mobile en translation entre la position basse et la position haute à l'aide d'un autre système de translation, celui-ci n'étant pas limité à la crémaillère.

Le siège peut comprendre un axe déflecteur autour duquel peut coulisser le harnais de sécurité, cet axe étant avantageusement fixe relativement au dossier.

Outre l'assise, le dossier et la têtière, la structure peut comprendre une embase par rapport à laquelle l'assise peut coulisser pour permettre au siège d'occuper une position assise et au moins une position inclinée.

La position intermédiaire prédéfinie peut être choisie de manière à ce qu'un enfant grandissant, par exemple entre les âges de quelques mois à 4 ans, soit toujours correctement attaché dans le siège, avec les fourreaux correctement positionnés, au fur et à mesure que l'on déplace la têtière pour adapter sa position à la taille de l'enfant. En effet, comme expliqué plus haut, pour des positions de la têtière situées en dessous de la position intermédiaire prédéfinie, la longueur apparente va varier d'une faible longueur jusqu'à une longueur maximale qui sera conservée pour les positions de la têtière situées au-dessus de la position intermédiaire prédéfinie.

L'homme du métier saura déterminer à partir de quelle taille de l'enfant il est préférable que la longueur de l'élément de retenue du fourreau reste constante malgré le déplacement de la têtière. Cette taille déterminera la position intermédiaire prédéfinie.

### 5. Liste des figures

D'autres caractéristiques et avantages de l'invention pourront apparaître plus clairement à la lecture de la description suivante d'un mode de réalisation de l'invention donné à titre d'exemple illustratif non limitatif et des dessins annexés parmi lesquels :
- la figure 1 est une vue schématique de face d'un siège conforme à l'invention,
- la figure 2 illustre de manière schématique en vue ¾ arrière et de côté une structure de siège conforme à l'invention dépouillée d'accoudoirs et d'éléments de garniture,
- la figure 3 est une vue schématique en coupe dans un plan vertical d'un siège conforme à l'invention, la têtière étant en position basse,
- la figure 4 est une vue agrandie d'une portion de la figure 3,
- la figure 5 est une vue schématique en coupe dans un plan vertical d'un siège conforme à l'invention, la têtière étant en position haute,
- la figure 6 est une vue agrandie d'une portion de la figure 5,
- les figures 7 à 9 illustrent de manière schématique et partielle en vue de derrière un siège conforme à l'invention, lorsque la têtière est respectivement en position basse, en position intermédiaire prédéfinie et en position intermédiaire haute située au-dessus de la position intermédiaire prédéfinie et en dessous de la position haute ;
- la figure 10 illustre schématiquement un exemple de têtière présentant des passages de l'élément de retenue distincts des fentes de passage des bretelles du harnais ;
- les figures 11 à 15 présentent des variantes de la solution de la figure 10.

### 6. Description détaillée d'un mode de réalisation de l'invention

L'invention propose donc une approche nouvelle du contrôle de la position des fourreaux le long des sangles qui les portent, en fonction de la position de la têtière par rapport au dossier. Ce contrôle est complexe, et non linéaire, car il repose sur une analyse précise de la morphologie des enfants selon leur taille et/ou leur poids, de façon à optimiser le placement des fourreaux. Pour ceci, on définit deux comportements différents, associés à deux plages de déplacement de la têtière :
- première plage, dite plage supérieure : les éléments de retenue ont un déplacement lié à la têtière lorsque celle-ci est entre ladite position haute et une position intermédiaire prédéfinie ;
- seconde plage, dite plage inférieure : les éléments de retenue sont désolidarisés de ladite têtière et solidaires du dossier, lorsque la têtière est entre ladite position intermédiaire prédéfinie et la position basse.

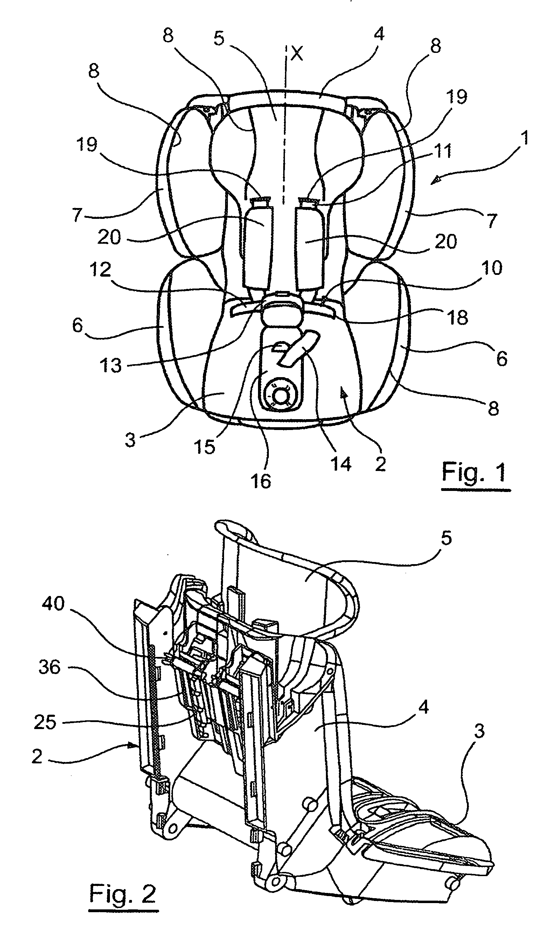

On a représenté sur la figure 1 le côté avant d'un siège 1 conforme à l'invention, comprenant une structure 2. La structure 2 comprend une assise 3, un dossier 4 s'étendant selon un axe X sensiblement vertical, et une têtière 5, encore appelée appuie-tête.

La têtière 5 est agencée au sein de la structure 2 de manière à pouvoir occuper plusieurs positions, dont une position basse et une position haute, et à être mobile en translation relativement au dossier entre la position basse et la position haute, selon l'axe X.

Dans cet exemple, l'assise 3 est bordée de part et d'autre d'accoudoirs 6 et le dossier 4 est bordé d'éléments de protection 7. Les accoudoirs 6 et les éléments de protection 7 sont agencés pour protéger latéralement l'enfant assis dans le siège et également pour apporter du confort à celui-ci.

Les différents éléments de la structure 2, à savoir l'assise 3, le dossier 4, les accoudoirs 6, les éléments de protection 7 et la têtière 5, sont recouverts, comme illustré, d'éléments de garniture, comprenant généralement une mousse recouverte de tissu, de façon connue en soi. Les différents morceaux de tissu peuvent être cousus entre eux à l'aide de coutures dont certaines sont visibles et numérotées 8 sur la figure 1.

Le siège 1 comporte, outre la structure 2, un harnais de sécurité 10 comprenant deux bretelles 11 et des parties latérales 12 du harnais. Les deux bretelles 11 et les parties latérales 12 peuvent être réunies à l'aide d'une boucle 13 permettant d'attacher et de retenir l'enfant.

Le harnais 10 se prolonge par une languette 14, constituant une extrémité de réglage du harnais dont la longueur peut être modifiée, de manière à régler la longueur du harnais de sécurité, et notamment de serrer celui-ci, en tirant sur la languette 14. Le bouton de réglage 15 permet de détendre le harnais.

Un support 16 porte notamment le bouton de réglage 15 et une ouverture permettant le passage de la languette 14.

Le harnais de sécurité 10 comporte en outre une partie non visible depuis le côté avant du siège, située sur le côté arrière du siège. Les parties latérales 12 et les bretelles 11 traversent respectivement l'assise 3 et la têtière 5 à l'aide d'ouvertures 18 et 19 réalisées respectivement dans l'assise et la têtière, sous forme de fentes dans l'exemple illustré. Les ouvertures 19 sont fixes relativement à la têtière 5 et donc solidaires en translation de celle-ci.

Le siège comporte également deux fourreaux 20, consistant en des manchons destinés à entourer chacune des bretelles 11 du harnais de sécurité 10. Les fourreaux 20 sont réalisés dans cet exemple en tissu et mousse et, pour la partie venant en contact avec les vêtements de l'enfant, en un matériau présentant un fort coefficient de frottement, permettant une meilleure retenue de l'enfant en cas de choc.

Les fourreaux 20 sont reliés au siège à l'aide d'éléments de retenue 21, tels que des sangles ou des câbles, comprenant chacun une partie pouvant être visible, ou apparente, sur le côté avant du siège (mais non visibles sur la figure 1 car masquées par les bretelles 11). Dans l'exemple illustré, chaque fourreau 20 est équipé d'un élément de retenue 21. Chaque fourreau 20 est donc fixé au siège par l'intermédiaire de l'élément de retenue 21 indépendamment du harnais de sécurité 10.

Sur la figure 2, on a représenté isolément le côté arrière et le côté latéral de la structure 2 dépourvue d'éléments de garniture, de harnais, d'éléments de retenue.

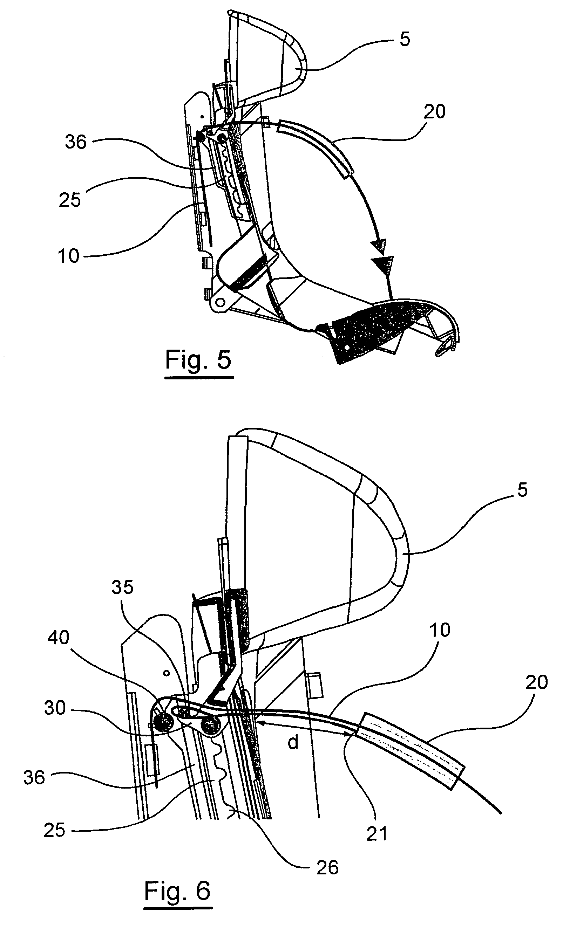

Comme on peut le voir plus en détail sur les figures 3 à 9, la têtière peut se déplacer entre une position basse illustrée sur les figures 3 et 4 et une position haute illustrée sur les figures 5 et 6. Plusieurs positions intermédiaires peuvent être prévues, comme dans l'exemple illustré. Ce réglage en hauteur, sensiblement verticalement selon l'axe X est rendu possible à l'aide d'une crémaillère 25 s'étendant selon l'axe X comportant une pluralité d'encoches 26, correspondant chacune à une position.

La têtière 5 comporte un axe 27 sensiblement horizontal, pouvant venir se loger à l'intérieur de chacune des encoches 26, pour occuper la position donnée par l'encoche 26 correspondante. Dans l'exemple illustré, le siège comporte quatre crémaillères 25 et deux axes 27 dont chaque extrémité est mobile en translation dans une crémaillère. Le siège pourrait également comporter un seul axe 27 et deux crémaillères 25 sans sortir du cadre de l'invention.

La têtière 5 comporte par ailleurs des moyens de solidarisation sélective 30 de chaque élément de retenue 21 configurés de manière à maintenir sensiblement constante la longueur apparente *d* de l'élément de retenue 21 du fourreau 20 lorsque la têtière 5 se déplace sur une portion comprise entre une position intermédiaire prédéfinie et la position haute de la têtière et à permettre que cette longueur apparente varie lorsque la têtière se déplace sur une portion comprise entre la position basse et la position intermédiaire prédéfinie. En effet, les éléments de retenue sont fixés à des moyens de maintien coopérant avec des moyens de solidarisation sélective, de façon que les moyens de maintien soient solidaires de la têtière 5 lorsque celle-ci est entre la position haute et la position intermédiaire prédéfinie, et désolidarisés de la têtière et solidaires du dossier lorsque la têtière est entre la position intermédiaire prédéfinie et la position basse. La position intermédiaire prédéfinie est une position comprise entre la position basse et la position haute.

La longueur apparente *d* de l'élément de retenue 21 correspond à la partie visible de l'élément de retenue sur le côté avant du siège et peut être masquée par les bretelles 11. La longueur apparente *d* de l'élément de retenue 21 peut, selon l'invention, être constante ou variable en fonction de la position de la têtière 5.

Dans l'exemple illustré, la position intermédiaire prédéfinie correspond à la position de la têtière lorsque l'axe 27 est enclenché dans l'encoche 26a illustrée sur la figure 4. Cette encoche pourrait également être située sensiblement au même niveau que l'extrémité inférieure de la glissière 36.

Dans l'exemple illustré, les moyens de maintien comprennent au moins une tige 35 et le siège comprend au moins une glissière 36. Dans cet exemple, les extrémités de la tige 35 sont retenues et mobiles en coulissement chacune dans une glissière 36, et les moyens de maintien comporte la tige 35, retenant l'élément de retenue 21. Au total, dans l'exemple illustré, le siège comprend deux tiges 35 aptes à coulisser chacune dans deux glissières 36 à leurs extrémités, soient quatre glissières, soit encore une tige 35 et deux glissières 36 pour les deux éléments de retenue 21.

Dans l'exemple illustré, chaque élément de retenue 21 forme une boucle autour d'une tige 35 de manière à être solidaire de celle-ci. La tige 35 est mobile en translation au sein de la glissière 36 correspondante.

Les moyens de solidarisation sélective 30 sont agencés pour entraîner la tige 35 en coulissement dans la glissière 36 lorsque la têtière 5 est déplacée entre la position intermédiaire prédéfinie donnée par l'encoche 26a et la position haute.

Les moyens de solidarisation sélective 30 comportent dans l'exemple illustré au moins un crochet d'entraînement visible sur les figures 3 à 6 en particulier. Dans l'exemple illustré, les moyens de solidarisation sélective 30 comportent, comme visible sur les figures 7 à 9, deux crochets d'entraînement pour chacun des moyens de maintien, notamment tige 35, disposés chacun à proximité d'une extrémité d'une tige 35 de manière à ne pas être en contact avec l'élément de retenue 21. Au total, il y a donc quatre crochets d'entraînement, ce nombre n'étant pas limitatif et pouvant être différent, notamment égal à deux, sans sortir du cadre de l'invention.

Dans le mode de réalisation illustré, les crémaillères 25 comprennent X encoches, correspondant à autant de positions possibles pour la têtière. A titre indicatif, ces positions peuvent correspondre à des longueurs apparentes telles que définies dans le tableau suivant :

| Plage de déplacement | Position | Longueur apparente *d* (cm) |
|---|---|---|
| Plage inférieure | P1 | 5 |
| | P2 | 7,5 |
| Plage supérieure | P3 | 10 |
| | P4 | 10 |
| | P5 | 10 |
| | P6 | 10 |

Bien sûr, le nombre global de positions et le nombre de positions dans chaque plage peuvent varier, selon les besoins, de même que les longueurs apparentes, qui sont données à titre indicatif.

Dans un mode de réalisation non illustré, la glissière comporte une extrémité supérieure ouverte, par exemple pour faciliter l'installation de la tige notamment.

Le siège comporte, dans l'exemple illustré et pour chaque élément de retenue, une extrémité inférieure 37 de la glissière 36 formant une retenue pour la tige 35 lorsque la têtière 5 est dans une position comprise entre la position basse et la position intermédiaire prédéfinie.

Ainsi, la longueur apparente de l'élément de retenue est variable en fonction du déplacement de la têtière entre la position basse et la position intermédiaire prédéfinie. Elle est minimum en position basse et augmente quand la têtière monte. En effet, pour ces positions de la têtière comprises entre la position basse et la position intermédiaire prédéfinie, la tige 35 et donc une extrémité de l'élément de retenue est fixe, et maintenue dans la retenue formée par l'extrémité inférieure 37 de la glissière. Comme la longueur totale de l'élément de retenue est fixe, lorsque la têtière est en position basse, la distance entre l'extrémité fixée sur la tige de l'élément de retenue qui est fixe et l'ouverture 19 de la têtière est maximale et donc la longueur apparente *d* correspondant à la longueur de l'élément de retenue entre l'ouverture 19 et l'extrémité de l'élément de retenue fixée au fourreau est minimale. Cette longueur apparente *d* augmente peu à peu, au fur et à mesure que la têtière monte vers la position intermédiaire prédéfinie.

Au moins un axe déflecteur 40 est fixé relativement au siège, à l'arrière de celui-ci, en partie haute et est agencé pour que le harnais 10 puisse coulisser autour de cet axe déflecteur 40. Dans l'exemple illustré, le siège comporte deux axes déflecteurs 40 alignés entre eux, maintenus à leurs extrémités par des paliers 45 ou encoches ou fixations à l'axe, sans contact avec le harnais.

La têtière 5 comporte également au moins une ouverture 41, par exemple une fente, correspondant à l'ouverture 19, et réalisée dans l'élément de garniture de la têtière, pour permettre le passage du harnais de sécurité 10 et de l'élément de retenue 21 depuis le côté arrière du siège vers le côté avant de celui-ci.

La têtière 5 comporte des moyens de déviation 42 de l'élément de retenue 21 et également du harnais de sécurité 10, agencés pour modifier et faire varier la longueur apparente *d* de l'élément de retenue 21 lorsque la têtière 5 est déplacée entre la position basse illustrée sur les figures 3 et 4 et la position intermédiaire prédéfinie mentionnée plus haut. Les moyens de déviation 42 sont constitués dans l'exemple illustré par le bord supérieur de l'ouverture 41.

On peut considérer que l'élément de retenue 21 présente deux parties, à savoir une partie cachée par la structure 2, comprenant une extrémité de l'élément de retenue fixée à la tige 35, et une partie visible comprenant une extrémité de l'élément de retenue fixée au fourreau. Entre la position basse et la position intermédiaire prédéfinie, la longueur apparente *d* de l'élément de retenue 21 varie au moins en partie grâce aux moyens de déviation 42 formés, dans l'exemple illustré, par un bord supérieur de l'ouverture 41 d'une longueur minimale à une longueur maximale. Cette longueur apparente *d* est maintenue sensiblement constante et maximale lorsque la têtière 5 est déplacée entre la position intermédiaire prédéfinie et la position haute grâce au coulissement de la tige 35 à l'intérieur de la glissière 36 à l'aide du crochet d'entraînement fixe relativement à la têtière 5.

Pour permettre le passage et le déplacement des éléments de retenue 21, du harnais et d'une partie de la têtière, le dossier 4 peut comporter, comme on peut le voir sur les figures 7 à 9, au moins une (deux dans l'exemple illustré) ouverture 50, de forme rectangulaire dans l'exemple illustré, s'étendant sur une hauteur suffisante pour permettre le déplacement de la têtière dans la crémaillère. Ces ouvertures 50 peuvent être masquées par la têtière lorsque l'on regarde l'avant du siège.

L'invention n'est bien sûr pas limitée à l'exemple de réalisation qui vient d'être décrit.

Tout ou partie des nombres d'éléments de retenue 21, tiges 35, glissières 36, crémaillères 25, axes 27 ou 40 peut être modifié sans sortir du cadre de l'invention.

Les sangles peuvent être remplacées par des éléments de retenue assurant la même fonction, tels que des câbles, des bandes de tissu ou autres. On peut prévoir des moyens pour les désolidariser des fourreaux, par exemple pour permettre le nettoyage de ces derniers.

Par ailleurs, les moyens de solidarisation sélective 30 peuvent être réalisés par d'autres moyens qu'un crochet d'entraînement. Les moyens de déviation, lorsqu'il y en a, peuvent être réalisés par d'autres moyens que le bord de l'ouverture 41 de la têtière. Les moyens de maintien peuvent être constitués par d'autres moyens que la tige.

La têtière peut être déplacée en translation relativement au dossier par un autre moyen que par coulissement dans une crémaillère.

Dans certains modes de réalisation, le siège peut occuper, outre la position assise, au moins une position inclinée. Dans ce cas, le dossier est incliné, et l'axe X suivant le mouvement du dossier, n'est plus vertical, mais s'étend selon l'inclinaison du dossier. D'une manière générale, l'axe X peut ne pas être vertical mais incliné, restant toujours l'axe du dossier.

Dans l'exemple illustré, le siège comporte des moyens de maintien de chaque élément de retenue et des moyens de déviation, de manière à faire varier la longueur apparente dudit élément de retenue du fourreau lorsque la têtière est déplacée sur une portion de déplacement comprise entre la position basse et la position intermédiaire prédéfinie. On ne sort pas du cadre de l'invention si le siège comporte seulement des moyens de maintien de chaque élément de retenue ou seulement des moyens de déviation ou tout autre système pour obtenir un résultat similaire, à savoir une variation de la longueur apparente lorsque la têtière est déplacée entre la position basse et la position intermédiaire prédéfinie.

Dans un mode de réalisation non illustré et pour certaines positions de la têtière, les fourreaux peuvent être partiellement logés à l'intérieur du siège auto, en passant au travers des fentes 19, et donc partiellement non visibles depuis l'extérieur du siège.

Un inconvénient que l'on peut rencontrer dans les systèmes décrits ci-dessus est qu'un élément de retenue peuvent être coincé, ou bloqué, sous la bretelle, dans la fente dans laquelle ces deux éléments circulent, voire s'emmêlé avec cette bretelle. Dans ce cas, bien sûr, la longueur apparente est incorrecte, et insuffisante.

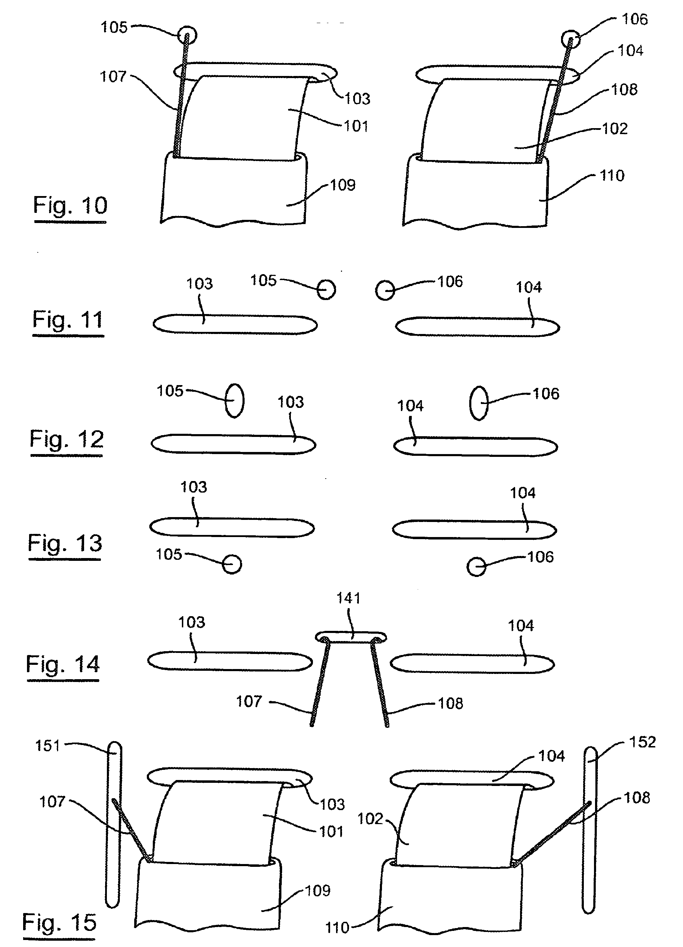

Pour éviter ce risque, l'invention propose, dans certains modes de réalisation, de prévoir des passages, ou ouvertures, distincts des fentes de passage des bretelles. Une telle solution est illustrée par la figure 10.

Les bretelles 101 et 102 circulent dans deux fentes 103 et 104 formées dans la têtière. Deux ouvertures distinctes 105 et 106 sont ménagées dans la têtière, dans lesquelles circulent les éléments de retenue 107 et 108, reliés respectivement aux fourreaux 109 et 110.

Ainsi, il n'y a pas de risque que les bretelles 101 et 102 perturbent le déplacement et le placement des éléments de retenue 107 et 108. Par ailleurs, ces ouvertures spécifiques 105 et 106 sont de taille réduite, par rapport aux fentes 103 et 104, et placées en fonction des besoins, de façon à optimiser le guidage et le placement des éléments de retenue.

Selon les besoins, et comme illustré par les figures 11 à 13, les ouvertures peuvent être de forme et d'emplacement choisis. Il est également possible de prévoir une ouverture unique 141, comme illustré sur la figure 14.

Il est à noter que cette approche peut être utilisée indépendamment des moyens de solidarisation sélective décrits précédemment.

Selon encore une approche, illustrée par la figure 15, les ouvertures spécifiques 151, 152 s'étendent sensiblement verticalement (ou plus précisément sensiblement parallèlement à l'axe de déplacement de la têtière). Cette approche permet un alignement plus direct (limitant les frottements) de l'élément de retenue, qui peut se déplacer dans son ouverture 151,152, selon la position de la têtière. Il est en effet important de noter que, selon l'invention, le contrôle de la longueur apparente des éléments de retenue est assuré par les moyens de solidarisation sélective et non pas par la position des fentes de passage des bretelles.

Dans toute la description, les expressions « comportant un » ou « comprenant un » doivent être comprises comme étant synonymes des expressions

« comportant au moins un » et « comprenant au moins un » respectivement, sauf si le contraire est spécifié.

## Revendications

1. Siège (1) pour enfant destiné à être installé dans un véhicule, notamment automobile, comprenant une assise (3), un dossier (4) et une têtière (5) mobile en translation relativement au dossier (4) entre une position basse et une position haute, ledit siège étant équipé d'un harnais de sécurité (10) destiné à maintenir un enfant assis dans le siège, comprenant deux bretelles (11), portant chacune un fourreau (20) relié au siège par l'intermédiaire d'un élément de retenue (21) indépendamment du harnais de sécurité (10),
**caractérisé en ce que** chacun desdits éléments de retenue (21) est fixé à des moyens de maintien coopérant avec des moyens de solidarisation sélective (30) à ladite têtière, de façon que lesdits moyens de maintien soient :
- solidaires de la têtière (5) lorsque celle-ci est entre ladite position haute et une position intermédiaire prédéfinie,
- désolidarisés de ladite têtière (5), et solidaires du dossier (4), lorsque la têtière est entre ladite position intermédiaire prédéfinie et la position basse.

2. Siège selon la revendication précédente, dans lequel lesdits moyens de maintien comprennent au moins une tige (35) fixée à une portion de l'élément de retenue (21) du fourreau, et le siège comporte au moins une glissière (36), ladite tige (35) étant apte à coulisser dans la glissière.

3. Siège selon la revendication 2, dans lequel les moyens de solidarisation sélective (30) comportent au moins un crochet d'entraînement solidaire en déplacement de la têtière (5), ledit crochet d'entraînement étant configuré pour entraîner la tige (35) en coulissement dans la ou les glissières (36).

4. Siège selon l'une des deux revendications 2 et 3, dans lequel la glissière (36) s'étend sensiblement parallèlement à un plan de déplacement de la têtière (5), sur une portion seulement de la course de la têtière.

5. Siège selon l'une quelconque des revendications précédentes, dans lequel les moyens de maintien coopèrent avec une portion du dossier lorsque la têtière (5) est dans une position comprise entre la position basse et la position intermédiaire prédéfinie.

6. Siège selon la revendication 5, dans lequel ladite portion du dossier comporte une extrémité inférieure (37) de la glissière (36) formant une retenue de la tige (35) lorsque la têtière (5) est dans une position comprise entre la position basse et la position intermédiaire prédéfinie.

7. Siège selon l'une quelconque des revendications précédentes, dans lequel la têtière (5) comporte des moyens de déviation (42) configurés pour, entre la position basse et la position intermédiaire prédéfinie, dévier l'élément de retenue (21) du fourreau de manière à faire varier la longueur apparente (*d*).

8. Siège selon la revendication précédente, dans lequel les moyens de déviation (42) sont configurés de manière à ce que la déviation de l'élément de retenue (21) varie en fonction du déplacement de la têtière.

9. Siège selon la revendication précédente, dans lequel les moyens de déviation (42) sont configurés de manière à ce que la déviation de l'élément de retenue (21) soit maximale en position basse de la têtière (5) et que la déviation diminue au fur et à mesure du déplacement de la têtière (5) jusqu'à une absence de déviation en position intermédiaire prédéfinie de la têtière (5).

10. Siège selon l'une quelconque des revendications précédentes, dans lequel la structure (2) comprend une crémaillère (25) munie d'encoches (26), la têtière (5) étant mobile en translation le long de ladite crémaillère (25), la têtière (5) pouvant occuper une pluralité de positions correspondant auxdites encoches (26) entre la position basse et la position haute.

11. Siège selon l'une quelconque des revendications précédentes, comprenant un axe déflecteur (40) autour duquel peut coulisser le harnais de sécurité (10), ledit axe déflecteur (40) étant fixe relativement au siège.

12. Siège selon l'une quelconque des revendications précédentes, **caractérisé en ce que** ladite têtière présente au moins une fente (103, 104) permettant le passage desdites bretelles (11; 101, 102) et au moins une ouverture (105, 106 ; 141 ; 151, 152), distincte de la ou desdites fentes (103, 104), permettant le passage desdits éléments de retenue (21 ; 107, 108).

## Claims

1. Child's seat (1) which is intended to be installed in a vehicle, in particular a motor vehicle, comprising a seat member (3), a backrest (4) and a headrest (5) which can be moved in translation relative to the backrest (4) between a low position and a high position, said seat being provided with a safety harness (10) which is intended to hold a child seated in the seat, comprising two shoulder straps (11) which each carry a sheath (20) which is connected to the seat by means of a retention element (21) independently of the safety harness (10),
**characterised in that** each of said retention elements (21) is fixed to maintaining means which co-operate with selective fixing means (30) for fixing to the headrest so that the maintaining means are:
- fixedly joined to the headrest (5) when it is between the high position and a predefined intermediate position,
- disengaged from the headrest (5) and fixedly joined to the backrest (4) when the headrest is between the predefined intermediate position and the low position.

2. Seat according to the preceding claim, wherein the maintaining means comprise at least one rod (35) which is fixed to a portion of the retention element (21) of the sheath, and the seat comprises at least one sliding rail (36), said rod (35) being capable of sliding in the sliding rail.

3. Seat according to claim 2, wherein the selective fixing means (30) comprise at least one driving hook fixedly joined to the headrest (5) in terms of movement, said driving hook being configured to drive the rod (35) in terms of sliding in the sliding rail(s) (36).

4. Seat according to either claim 2 or claim 3, wherein the sliding rail (36) extends substantially parallel with a plane for moving the headrest (5) over only a portion of the path of the headrest.

5. Seat according to any one of the preceding claims, wherein the maintaining means co-operate with a portion of the backrest when the headrest (5) is in a position between the low position and the predefined intermediate position.

6. Seat according to claim 5, wherein the portion of the backrest comprises a lower end (37) of the sliding rail (36) which forms a retention member for the rod (35) when the headrest (5) is in a position between the low position and the predefined intermediate position.

7. Seat according to any one of the preceding claims, wherein the headrest (5) comprises redirection means (42) which are configured, between the low position and the predefined intermediate position, to redirect the retention element (21) of the sheath in order to vary the apparent length (d).

8. Seat according to the preceding claim, wherein the redirection means (42) are configured so that the redirection of the retention element (21) varies in accordance with the movement of the headrest.

9. Seat according to the preceding claim, wherein the redirection means (42) are configured so that the redirection of the retention element (21) is at a maximum in the low position of the headrest (5) and the redirection decreases as the headrest (5) moves until there is a lack of redirection in the predefined intermediate position of the headrest (5).

10. Seat according to any one of the preceding claims, wherein the structure (2) comprises a rack (25) which is provided with notches (26), the headrest (5) being able to be moved in translation along the rack (25), the headrest (5) being able to occupy a plurality of positions corresponding to the notches (26) between the low position and the high position.

11. Seat according to any one of the preceding claims, comprising a deflecting shaft (40) around which the safety harness (10) can slide, said deflecting shaft (40) being fixed relative to the seat.

12. Seat according to any one of the preceding claims, **characterised in that** the headrest has at least one slot (103, 104) which allows the passage of the shoulder straps (11; 101, 102) and at least one opening (105, 106; 141; 151, 152) which is separate from the slot (s) (103, 104) and allows the passage of said retention elements (21; 107, 108).

## Patentansprüche

1. Sitz (1) für ein Kind, der dazu bestimmt ist, in einem Fahrzeug installiert zu werden, insbesondere in einem Kraftfahrzeug, der eine Sitzfläche (3), eine Rückenlehne (4) und einen Kopfteil (5), die in Bezug auf die Rückenlehne (4) zwischen einer Tiefstellung und einer Hochstellung verschiebbar ist, aufweist, wobei der Sitz mit einem Sicherheitsgeschirr (10) versehen ist, das dazu bestimmt ist, ein Kind, das in dem Sitz sitzt, zu halten, das zwei Gurte (11) aufweist, die jeweils eine Hülse (20) tragen, die mit dem Sitz über ein Rückhalteelement (21) von dem Sicherheitsgeschirr (10) unabhängig verbunden ist, **dadurch gekennzeichnet, dass** jedes der Rückhalteelemente (21) an Haltemitteln befestigt ist, die mit Mitteln zum selektiven Verbinden (30) mit dem Kopfteil zusammenwirken, so dass die Haltemittel:
- fest mit dem Kopfteil (5) verbunden sind, wenn sich dieser zwischen der Hochstellung und einer vorbestimmten Zwischenstellung befindet,
- von dem Kopfteil (5) getrennt und fest mit der Rückenlehne (4) verbunden sind, wenn der Kopfteil zwischen der vorbestimmten Zwischenstellung und der Tiefstellung liegt.

2. Sitz nach dem vorhergehenden Anspruch, wobei die Haltemittel mindestens einen Schaft (35) aufweisen, der an einem Abschnitt des Rückhalteelements (21) der Hülse befestigt ist, wobei der Sitz mindestens eine Gleitführung (36) aufweist, wobei der Schaft (35) in der Gleitführung gleiten kann.

3. Sitz nach Anspruch 2, wobei die Mittel zum selektiven Verbinden (30) mindestens einen Bewegungshaken aufweisen, der beim Verschieben mit dem Kopfteil (5) fest verbunden ist, wobei der Antriebshaken dazu konfiguriert ist, den Schaft (35) unter Gleiten in der oder den Gleitführungen (36) zu bewegen.

4. Sitz nach einem der zwei Ansprüche 2 und 3, wobei sich die Gleitführung (36) im Wesentlichen parallel zu einer Verschiebungsebene des Kopfteils (5) nur auf einem Abschnitt des Hubs des Kopfteils erstreckt.

5. Sitz nach einem der vorhergehenden Ansprüche, wobei die Haltemittel mit einem Abschnitt der Rückenlehne zusammenwirken, wenn sich der Kopfteil (5) in einer Position befindet, die zwischen der Tiefstellung und der vordefinierten Zwischenstellung liegt.

6. Sitz nach Anspruch 5, wobei der Abschnitt der Rückenlehne ein unteres Ende (37) der Gleitführung (36) aufweist, das eine Rückhaltung des Schafts (35) bildet, wenn der Kopfteil (5) in einer Position zwischen der Tiefstellung und der vorbestimmten Zwischenstellung liegt.

7. Sitz nach einem der vorhergehenden Ansprüche, wobei der Kopfteil (5) Umlenkmittel (42) aufweist, die dazu konfiguriert sind, zwischen der Tiefstellung und der vorbestimmten Zwischenstellung das Rückhalteelement (21) von der Hülse derart umzulenken, dass die scheinbare Länge (d) variiert wird.

8. Sitz nach dem vorhergehenden Anspruch, wobei die Umlenkmittel (42) derart konfiguriert sind, dass die Umlenkung des Rückhalteelements (21) in Abhängigkeit von der Bewegung des Kopfteils variiert.

9. Sitz nach dem vorhergehenden Anspruch, wobei die Umlenkmittel (42) derart konfiguriert sind, dass die Umlenkung des Rückhalteelements (21) in Tiefstellung des Kopfteils (5) maximal ist, und dass die Umlenkung im Laufe der Bewegung des Kopfteils (5) bis zu einem Ausbleiben der Umlenkung in vorbestimmter Zwischenstellung des Kopfteils (5) allmählich abnimmt.

10. Sitz nach einem beliebigen der vorhergehenden Ansprüche, wobei die Struktur (2) eine Zahnstange (25), die mit Kerben (26) versehen ist, aufweist, wobei der Kopfteil (5) entlang der Zahnstange (25) verschiebbar ist, wobei der Kopfteil (5) eine Vielzahl von Positionen, die den Kerben (26) entsprechen, zwischen der Tiefstellung und der Hochstellung einnehmen kann.

11. Sitz nach einem beliebigen der vorhergehenden Ansprüche, der eine Umlenkachse (40) aufweist, um die das Sicherheitsgeschirr (10) gleiten kann, wobei die Umlenkachse (40) in Bezug zu dem Sitz stationär ist.

12. Sitz nach einem beliebigen der vorhergehenden Ansprüche, **dadurch gekennzeichnet, dass** der Kopfteil wenigstens einen Schlitz (103, 104) aufweist, der das Durchgehen der Gurte (11; 101, 102) erlaubt, und mindestens eine Öffnung (105, 106; 141; 151, 152) aufweist, die von dem Schlitz oder den Schlitzen (103, 104) getrennt ist, die das Durchgehen der Rückhalteelemente (21; 107, 108) erlaubt.
